# EUROPÄISCHE PATENTSCHRIFT

(11) **EP 3 899 135 B1**
(45) Veröffentlichungstag und Bekanntmachung des Hinweises auf die Patenterteilung: **30.11.2022**
(21) Anmeldenummer: 19786558.7
(22) Anmeldetag: 09.10.2019
(51) Int. Cl.: D21D 1/22, D21D 1/30, D21D 1/26

(54) **MAHLANORDNUNG**
REFINING ARRANGEMENT
DISPOSITIF DE BROYAGE

(30) Priorität: 20.12.2018 DE 102018133114
(43) Veröffentlichungstag der Anmeldung: 27.10.2021
(73) Patentinhaber: Voith Patent GmbH, 89522 Heidenheim (DE)
(72) Erfinder: SCHMID, Marcel, 88213 Oberzell (DE); SCHMID, Martin, 88260 Argenbühl (DE)
(74) Vertreter: Voith Patent GmbH - Patentabteilung
(86) Internationale Anmeldenummer: PCT/EP2019/077325
(87) Internationale Veröffentlichungsnummer: WO 2020/126147

(56) Entgegenhaltungen:
- DE-A1-102008 046 592

## Beschreibung

Die Erfindung betrifft eine Mahlanordnung zur Mahlung von wässrig suspendierten Faserstoff zwischen zwei, einen Mahlspalt bildenden und relativ zueinander rotierenden Mahlflächen, die von Mahlleisten und dazwischen verlaufenden Nuten gebildet werden, wobei sich die Mahlleisten zumindest mit einer Richtungskomponente radial bezüglich der Rotationsachse erstrecken und die Faserstoffsuspension den Mahlspalt von einem radial innenliegenden, kreisförmigen Einlauf zu einem radial außenliegenden, kreisförmigen Auslauf durchströmt.

Es ist seit langem bekannt, Zellstofffasern, d.h. Frischzellstoff und/oder Altpapierfasern zu mahlen, um bei der daraus hergestellten Faserstoffbahn die gewünschten Eigenschaften, insbesondere hinsichtlich Festigkeit, Formation und Oberfläche erreichen zu können.

Bei den dabei zum Einsatz kommenden Refinern werden die Mahlflächen wegen des relativ schnellen Verschleißes von auswechselbaren, mit der entsprechenden Stützfläche verschraubten Mahlgarnituren gebildet.

Für das Erreichen der gewünschten Fasereigenschaften, insbesondere den Mahlgrad müssen die Mahlgarnituren dem zu behandelnden Faserstoff bestmöglich angepasst werden, auch um einen übermäßigen Verschleiß der Garnituren zu verhindern.

Außerdem wird zur Effizienzsteigerung der Faserbehandlung eine optimale Nutzung der verfügbaren Mahlfläche angestrebt.

Aus der DE 10 2008 046592 A1 ist ein Verfahren zur Mahlung von wässrig suspendierten Zellstofffasern sowie eine Mahlgarnitur zur Durchführung des Verfahrens bekannt. Das Verfahren dient zur Mahlung von wässrig suspendierten Zellstofffasern und verwendet mehrere mit Mahlkanten versehene Mahlgarnituren, von denen eine auf mindestens einem Stator und eine andere auf mindestens einem Rotor betrieben und die zu mahlende Suspension zwischen den beiden MahlGarnituren bearbeitet wird. Dabei fließt ein Teilstorm, der zur Ablaufseite geförderten Suspension an der Rückseite der statorseitigen Mahlgarnitur zurück und gelangt dann durch Öffnungen, die sich zwischen den Mahlkanten der statorseitigen Mahlgarnitur befinden, erneut in die Mahlzone. Das führt zu einer besonders gleichmäßigen und wirtschaftlichen Mahlung.

Die Aufgabe der Erfindung ist es die Effizienz der Faserbehandlung zu verbessern.

Erfindungsgemäß wurde die Aufgabe dadurch gelöst, dass unter wenigstens einer Mahlfläche mehrere den Auslauf mit dem Einlauf verbindende Rückströmkanäle angeordnet sind. Die Rückführung der Faserstoffsuspension über die Rückströmkanäle führt zu einer Mehrfachbehandlung und damit zu einer homogeneren, effizienteren Mahlung.

Darüber hinaus kann so auch ein Mangel an zu behandelnder Faserstoffsuspension problemlos durch eine entsprechende Rückführung ausgeglichen werden.

Dabei ist es vorteilhaft, wenn einige, vorzugsweise alle Rückströmkanäle keine Verbindung zum Mahlspalt aufweisen. Da die vom Auslauf zum Einlauf zurückzuführende Menge an Faserstoffsuspension vollumfänglich vom Auslauf zum Einlauf gelangt, kann einem ungleichmäßigen Verschleiß der Mahlfläche entgegengewirkt werden.

Des Weiteren kann es von Vorteil sein die im Rückströmkanal zurückfließende Menge an Faserstoffsuspension und damit den Druckaufbau zu beeinflussen. Hierzu können die Rückströmkanäle jeweils eine Verengung des Strömungsquerschnitts besitzen, welche für den speziellen Einsatzfall dimensioniert ist. Alternativ können die Rückströmkanäle zur aktiven Verstellung aber jeweils auch ein den Durchsatz beeinflussendes Ventil aufweisen.

Um eine Kurzschlussströmung über die Rückströmkanäle vom Einlauf zum Auslauf bei ungünstigen Betriebszuständen, wie überhöhtem Durchsatz oder negativer Druckdifferenz zwischen Einlauf und Auslauf zu verhindern, können die Rückströmkanäle jeweils eine, eine Strömung vom Einlauf zum Auslauf verhindernde Rückschlag-Klappe haben.

Zur Unterstützung der Umlenkung der aus dem Rückströmkanal in den Einlaufbereich des Mahlspalts strömenden Faserstoffsuspension sollte am Ausgang des Rückströmkanals der Übergang zwischen der Mahlfläche und dem unter ihr verlaufenden Rückstromkanal gekrümmt verlaufen, wobei der Krümmungsradius vorzugsweise wenigstens 4 mm beträgt.

Außerdem sollten am Auslauf zumindest vor den Rückstromkanälen Strömungsbarrieren vorhanden sein, die wenigstens mit einer Richtungskomponente radial verlaufen. Über diese Strömungsbarrieren wird die Rotation der Strömung der Faserstoffsuspension am Auslauf gebremst, so dass die Faserstoffsuspension leichter in die Rückströmkanäle fließen kann.

Im Interesse einer vereinfachten Herstellung der Rückströmkanäle ist es vorteilhaft, wenn zumindest die Mahlfläche mit den Rückströmkanälen aus mehreren, in Umfangsrichtung nebeneinander angeordneten Mahlsektoren besteht und einige, vorzugsweise alle Rückströmkanäle zwischen benachbarten Mahlsektoren verlaufen. Dies bedeutet, dass die Rückströmkanäle von den gegenüberliegenden Seitenwänden der Mahlsektoren gebildet werden.

Vereinfachend ist auch, wenn nur eine Mahlfläche rotiert und die andere Mahlfläche feststeht. In diesem Fall sollte nur die feststehende Mahlfläche Rückströmkanäle besitzen.

Anwendbar ist die Erfindung bei ebenen Mahlflächen, die sich senkrecht zur Rotationsachse erstrecken, aber auch bei konischen Mahlflächen bei denen die Rotationsachse der Konusachse entspricht.

Nachfolgend soll die Erfindung an zwei Ausführungsbeispielen näher erläutert werden. In der beigefügten Zeichnung zeigt:
Figur 1: einen schematischen Querschnitt durch einen Scheiben-Refiner und
Figur 2: durch einen konischen Refiner;
Figur 3: einen Ausschnitt am Auslauf 7 und
Figur 4: einen Ausschnitt am Einlauf 6 des Refiners;
Figur 5: einen Teilquerschnitt durch zwei benachbarte Mahlsektoren 11 und
Figur 6: eine Längsseite eines Mahlsektors 11.

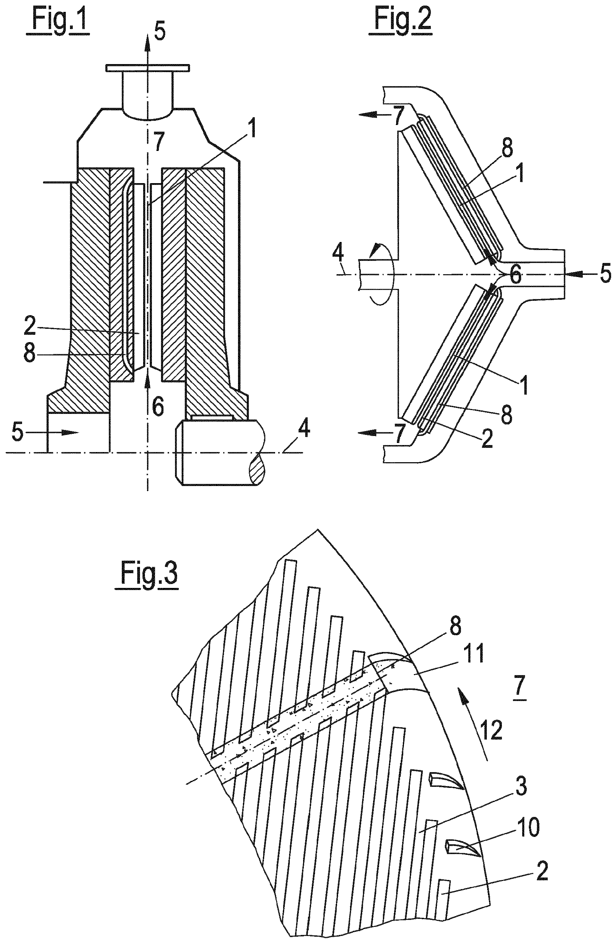

Im Gehäuse der Mahlanordnung wird gemäß Figur 1 ein Mahlspalt 1 von einer feststehenden und mit dem Gehäuse gekoppelten Mahlfläche und einer um eine Rotationsachse 4 rotierenden Mahlfläche gebildet, wobei sich die Mahlflächen senkrecht zur Rotationsachse 4 erstrecken.

Dabei verlaufen die beiden ebenen, kreisringförmigen Mahlflächen parallel zueinander. Der Abstand zwischen den Mahlflächen ist meist einstellbar.

Die rotierende Mahlfläche wird hier von einer im Gehäuse rotierbar gelagerten Welle in Rotationsrichtung 12 bewegt. Angetrieben wird diese Welle von einem ebenfalls im Gehäuse vorhandenen Antrieb.

Die zu mahlende Fasersuspension 5 gelangt bei dem hier gezeigten Beispiel über einen radial innenliegenden, kreisförmigen Einlauf 6 in den Mahlspalt 1 zwischen den beiden Mahlflächen.

Die Fasersuspension 5 passiert die zusammenwirkenden Mahlflächen radial nach außen und verlässt den sich anschließenden radial außenliegenden, kreisförmigen Auslauf 7.

Nicht dargestellt sind die an sich bekannten Mittel, mit denen eine Kraft erzeugt wird, um die beiden Mahlflächen gegeneinander zu drücken.

Beide Mahlflächen werden jeweils von mehreren, in Umfangsrichtung nebeneinander gereihten Mahlsektoren 11 gebildet.

Die Mahlflächen werden von einer Vielzahl von sich zumindest mit einer Richtungskomponente radial bezüglich der Rotationsachse 4 erstreckenden Mahlleisten 2 und dazwischenliegenden Nuten 3 gebildet.

Der Querschnitt der Mahlleisten 2, auch Messer genannt, ist im Allgemeinen rechteckig, wobei es aber auch andere Formen gibt.

Die zwischen den Mahlleisten 2 verlaufenden Nuten 3 haben ebenfalls einen rechteckigen Querschnitt und dienen als Strömungskanäle für die Fasersuspension 5. Die Nuttiefe beträgt meist zwischen 2 und 20 mm.

Im Unterschied hierzu sind die beiden gegenüberliegenden, parallelen Mahlflächen bei Figur 2 konisch ausgebildet, wobei die Rotationsachse 4 mit der Konusachse übereinstimmt.

Die rotierende, radial innenliegende Mahlfläche wird hier von einer im Gehäuse rotierbar gelagerten Welle in Rotationsrichtung 12 bewegt. Angetrieben wird diese Welle von einem ebenfalls im Gehäuse vorhandenen Antrieb.

Auch hier werden die beiden Mahlflächen jeweils von mehreren Mahlsektoren 11 gebildet, die sich auf einer parallel zum Mahlspalt 1 verlaufenden Stützfläche abstützen und mit dieser lösbar verbunden sind.

Der für die Mahlung wichtige Schnittwinkel ergibt sich, wenn die bezüglich der Rotationsachse 4 axial gegenüberliegenden Mahlkanten der Mahlleisten 2 bei der Rotation der Mahlfläche aneinander vorbeibewegt werden.

Zur Maximierung der Schnittkantenlänge ist es ebenso wichtig, die Breite der Nuten 3 zumindest überwiegend konstant zu halten.

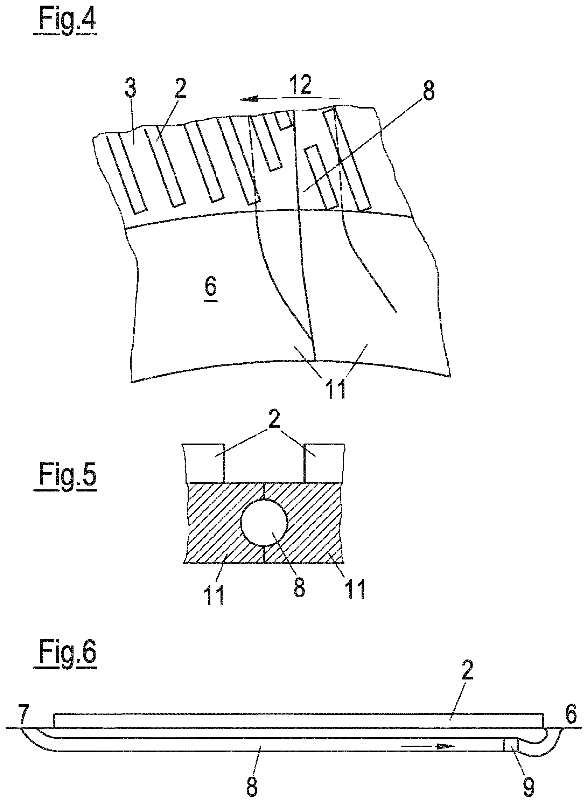

Erfindungswesentlich ist, dass hier, wie insbesondere in Figur 6 zu erkennen, unter der feststehenden Mahlfläche mehrere den Auslauf 7 mit dem Einlauf 6 verbindende Rückströmkanäle 8 angeordnet sind. Über diese Rückströmkanäle 8 kann zumindest ein Teil der Faserstoffsuspension 5 vom Auslauf 7 zum Einlauf 6 zurückgeführt werden, so dass die Faserstoffsuspension nochmals den Mahlspalt 1 passiert. Im Ergebnis ergibt sich hierdurch eine effizientere Mahlung sowie ein größeres Betriebsfenster durch die selbstregulierenden Druckverhältnisse, welche dazu führen, dass sich bei kleinem Durchsatz eine hohe Rückströmung und bei hohem Durchsatz eine geringe Rückströmung einstellt.

Wesentlich ist in diesem Zusammenhang auch, dass alle Rückströmkanäle 8 keine direkte Verbindung zum Mahlspalt 1 aufweisen, so dass die Faserstoffsuspension 5 nicht in den Mahlspalt 1 sondern vollumfänglich in den Bereich des Einlaufs 6 zurückgeführt wird. Dies wirkt einem ungleichmäßigen Verschleiß der Mahlflächen entgegen.

Um die Menge der in den Rückströmkanälen 8 zurückgeführten Faserstoffsuspension 5 zu steuern, kann in diesen jeweils ein Ventil 9 angeordnet sein. Statt des Ventils 9 können die Rückströmkanäle 8 aber jeweils auch eine Verengung des Strömungsquerschnitts aufweisen. Der Querschnitt der Verengung müsste dann auf den speziellen Einsatzfall eingestellt werden.

Da es bei ungünstigen Betriebsbedingungen zu einer Kurzschlussströmung über die Rückströmkanäle 8 vom Einlauf 6 zum Auslauf 7 kommen könnte, kann es alternativ zum Ventil 9 oder auch als Ergänzung zur Verengung von Vorteil sein, in den Rückströmkanälen 8 jeweils eine, eine Strömung vom Einlauf 6 zum Auslauf 7 verhindernde Rückschlag-Klappe vorzusehen.

Eine einfache Realisierung der Rückströmkanäle 8 ergibt sich, wenn diese gemäß Figuren 4 und 5 jeweils zwischen zwei in Umfangsrichtung benachbarten Malsektoren 11 verlaufen. Dies bedeutet, dass die Längsseiten der Mahlsektoren 11 jeweils eine Hälfte der Mantelfläche der Rückströmkanäle 8 bilden. Damit lassen sich die Mahlsektoren 11 auch wie bisher einfach gießen.

Zwischen den Mahlsektoren 11 sind die Mahlleisten 2, wie in Figur 3 dargestellt, unterbrochen. Dies erleichtert die Einströmung der Faserstoffsuspension 5 in den Mahlspalt 1.

Infolge der Rotation einer Mahlfläche wird auch die Faserstoffsuspension 5 am Einlauf 6 und am Auslauf 7 in Rotation versetzt, was den Zufluss in und den Abfluss aus den Rückströmkanälen 8 beeinträchtigt.

Zur Abbremsung dieser Rotationsströmung befinden sich daher entsprechend Figur 3 am Auslauf 7 vor und neben den Rückstromkanälen 8 Strömungsbarrieren 10, die im Wesentlichen radial verlaufen.

Für eine bessere Umlenkung der aus den Rückströmkanälen 8 fließenden Faserstoffsuspension 5 in den Einlauf 6 der Mahlanordnung verläuft, wie in Figur 6 angedeutet, am Ausgang des Rückströmkanals 8 der Übergang zwischen der Mahlfläche und dem unter ihr verlaufenden Rückstromkanal 8 gekrümmt mit einem Krümmungsradius von wenigstens 4 mm.

## Patentansprüche

1. Mahlanordnung zur Mahlung von wässrig suspendiertem Faserstoff zwischen zwei, einen Mahlspalt (1) bildenden und relativ zueinander rotierenden Mahlflächen, die von Mahlleisten (2) und dazwischen verlaufenden Nuten (3) gebildet werden, wobei sich die Mahlleisten (2) zumindest mit einer Richtungskomponente radial bezüglich der Rotationsachse (4) erstrecken und die Faserstoffsuspension (5) den Mahlspalt (1) von einem radial innenliegenden, kreisförmigen Einlauf (6) zu einem radial außenliegenden, kreisförmigen Auslauf (7) durchströmt, **dadurch gekennzeichnet, dass** unter wenigstens einer Mahlfläche mehrere den Auslauf (7) mit dem Einlauf (6) verbindende Rückströmkanäle (8) angeordnet sind.

2. Mahlanordnung nach Anspruch 1, **dadurch gekennzeichnet, dass** einige, vorzugsweise alle Rückströmkanäle (8) keine Verbindung zum Mahlspalt (1) aufweisen.

3. Mahlanordnung nach Anspruch 1 oder 2, **dadurch gekennzeichnet, dass** die Rückströmkanäle (8) jeweils eine Verengung des Strömungsquerschnitts besitzen.

4. Mahlanordnung nach Anspruch 1oder 2, **dadurch gekennzeichnet, dass** die Rückströmkanäle (8) jeweils ein den Durchsatz beeinflussendes Ventil (9) besitzen.

5. Mahlanordnung nach einem der vorhergehenden Ansprüche, **dadurch gekennzeichnet, dass** die Rückströmkanäle (8) jeweils eine, eine Strömung vom Einlauf (6) zum Auslauf (7) verhindernde Rückschlag-Klappe haben.

6. Mahlanordnung nach einem der vorhergehenden Ansprüche, **dadurch gekennzeichnet, dass** am Ausgang des Rückströmkanals (8) der Übergang zwischen der Mahlfläche und dem unter ihr verlaufenden Rückstromkanal (8) gekrümmt verläuft, wobei der Krümmungsradius vorzugsweise wenigstens 4 mm beträgt.

7. Mahlanordnung nach einem der vorhergehenden Ansprüche, **dadurch gekennzeichnet, dass** am Auslauf (7) zumindest vor den Rückstromkanälen (8) Strömungsbarrieren (10) vorhanden sind, die wenigstens mit einer Richtungskomponente radial verlaufen.

8. Mahlanordnung nach einem der vorhergehenden Ansprüche, **dadurch gekennzeichnet, dass** zumindest die Mahlfläche mit den Rückströmkanälen (8) aus mehreren, in Umfangsrichtung nebeneinander angeordneten Mahlsektoren (11) besteht und einige, vorzugsweise alle Rückströmkanäle (8) zwischen benachbarten Mahlsektoren (11) verlaufen.

9. Mahlanordnung nach einem der vorhergehenden Ansprüche, **dadurch gekennzeichnet, dass** eine Mahlfläche feststeht.

10. Mahlanordnung nach Anspruch 9, **dadurch gekennzeichnet, dass** nur die feststehende Mahlfläche Rückströmkanäle (8) besitzt.

11. Mahlanordnung nach einem der vorhergehenden Ansprüche, **dadurch gekennzeichnet, dass** die Mahlflächen eben sind und sich senkrecht zur Rotationsachse (4) erstrecken.

12. Mahlanordnung nach einem der Ansprüche 1 bis 10, **dadurch gekennzeichnet, dass** die Mahlflächen konisch ausgebildet sind und die Rotationsachse (4) der Konusachse entspricht.

## Claims

1. Refining arrangement for refining fibrous material suspended in water between two refining surfaces forming a refining gap (1) and rotating relative to each other, which are formed by refining bars (2) and grooves (3) running between them, wherein the refining bars (2) extend at least with a directional component radially with respect to the axis of rotation (4), and the fibrous material suspension (5) flows through the refining gap (1) from a radially inner circular inlet (6) to a radially outer circular outlet (7), **characterized in that** a plurality of return flow channels (8) connecting the outlet (7) to the inlet (6) are arranged under at least one refining surface.

2. Refining arrangement according to Claim 1, **characterized in that** some, preferably all, of the return flow channels (8) have no connection to the refining gap (1) .

3. Refining arrangement according to Claim 1 or 2, **characterized in that** the return flow channels (8) each have a narrowing of the flow cross section.

4. Refining arrangement according to Claim 1 or 2, **characterized in that** the return flow channels (8) each have a valve (9) that influences the throughput.

5. Refining arrangement according to one of the preceding claims, **characterized in that** the return flow channels (8) each have a non-return flap that prevents a flow from the inlet (6) to the outlet (7).

6. Refining arrangement according to one of the preceding claims, **characterized in that** at the outlet of the return flow channel (8), the transition between the refining surface and the return flow channel (8) running under the same runs in a curve, the radius of curvature preferably being at least 4 mm.

7. Refining arrangement according to one of the preceding claims, **characterized in that** at the outlet (7), at least in front of the return flow channels (8), there are flow barriers (10) which run radially, at least with a directional component.

8. Refining arrangement according to one of the preceding claims, **characterized in that** at least the refining surface having the return flow channels (8) consists of a plurality of refining sectors (11) arranged beside one another in the circumferential direction and some, preferably all, of the return flow channels (8) run between adjacent refining sectors (11).

9. Refining arrangement according to one of the preceding claims, **characterized in that** one refining surface is stationary.

10. Refining arrangement according to Claim 9, **characterized in that** only the stationary refining surface has return flow channels (8).

11. Refining arrangement according to one of the preceding claims, **characterized in that** the refining surfaces are flat and extend at right angles to the axis of rotation (4).

12. Refining arrangement according to one of Claims 1 to 10, **characterized in that** the refining surfaces are formed conically and the axis of rotation (4) corresponds to the cone axis.

## Revendications

1. Ensemble de broyage destiné à broyer une matière fibreuse, se présentant sous la forme d'une suspension aqueuse, entre deux surfaces de broyage qui forment une fente de broyage (1), qui tournent l'une par rapport à l'autre et qui sont formées de baguettes de broyage (2) et de rainures (3) s'étendant entre elles, les baguettes de broyage (2) s'étendant, au moins avec une composante directionnelle, radialement par rapport à l'axe de rotation (4) et la suspension de matière fibreuse (5) s'écoulant à travers la fente de broyage (1) depuis une entrée circulaire radialement intérieure (6) vers une sortie circulaire radialement extérieure (7), **caractérisé en ce qu'**une pluralité de canaux d'écoulement de retour (8), qui relient la sortie (7) à l'entrée (6), sont disposés sous au moins une surface de broyage.

2. Ensemble de broyage selon la revendication 1, **caractérisé en ce qu'**une partie, de préférence la totalité, des canaux d'écoulement de retour (8) ne comportent aucune liaison menant à la fente de broyage (1) .

3. Ensemble de broyage selon la revendication 1 ou 2, **caractérisé en ce que** les canaux d'écoulement de retour (8) comportent chacun un rétrécissement de la section d'écoulement transversale.

4. Ensemble de broyage selon la revendication 1 ou 2, **caractérisé en ce que** les canaux d'écoulement de retour (8) comportent chacun une vanne (9) influant sur le débit.

5. Ensemble de broyage selon l'une des revendications précédentes, **caractérisé en ce que** les canaux d'écoulement de retour (8) comportent chacun un clapet anti-retour empêchant un écoulement allant de l'entrée (6) vers la sortie (7).

6. Ensemble de broyage selon l'une des revendications précédentes, **caractérisé en ce que**, à la sortie du canal d'écoulement de retour (8), la transition entre la surface de broyage et le canal d'écoulement de retour (8), s'étendant au-dessous de celle-ci, est incurvée, le rayon de courbure étant de préférence d'au moins 4 mm.

7. Ensemble de broyage selon l'une des revendications précédentes, **caractérisé en ce que** des barrières d'écoulement (10), qui s'étendent radialement au moins avec une composante directionnelle, sont présentes à la sortie (7) au moins en amont des canaux d'écoulement de retour (8).

8. Ensemble de broyage selon l'une des revendications précédentes, **caractérisé en ce qu'**au moins la surface de broyage pourvue des canaux d'écoulement de retour (8) comprend une pluralité de secteurs de broyage (11) disposés les uns à côté des autres dans la direction circonférentielle et une partie, de préférence la totalité, des canaux d'écoulement de retour (8) s'étendent entre des secteurs de broyage adjacents (11) .

9. Ensemble de broyage selon l'une des revendications précédentes, **caractérisé en ce qu'**une surface de broyage est fixe.

10. Ensemble de broyage selon la revendication 9, **caractérisé en ce que** seule la surface de broyage fixe comporte des canaux d'écoulement de retour (8).

11. Ensemble de broyage selon l'une des revendications précédentes, **caractérisé en ce que** les surfaces de broyage sont planes et s'étendent perpendiculairement à l'axe de rotation (4).

12. Ensemble de broyage selon l'une des revendications 1 à 10, **caractérisé en ce que** les surfaces de broyage sont coniques et l'axe de rotation (4) correspond à l'axe du cône.
